**Europäisches Patentamt**

**European Patent Office**

**Office européen des brevets**

(19)

(11) Veröffentlichungsnummer: **0 212 511**
**B1**

(12) **EUROPÄISCHE PATENTSCHRIFT**

(45) Veröffentlichungstag der Patentschrift:
**15.02.89**

(21) Anmeldenummer: **86111021.1**

(22) Anmeldetag: **09.08.86**

(51) Int. Cl.⁴: **D06P 1/44**, D06P 1/52,
C08G 18/70, C08G 18/80

(54) Verwendung von stabilen Dispersionen fester, feinteiliger Polyisocyanate in Pigmentdruckpasten und Färbeflotten.

(30) Priorität: **17.08.85 DE 3529530**

(43) Veröffentlichungstag der Anmeldung:
**04.03.87 Patentblatt 87/10**

(45) Bekanntmachung des Hinweises auf die Patenterteilung:
**15.02.89 Patentblatt 89/7**

(84) Benannte Vertragsstaaten:
**AT BE CH DE FR GB IT LI NL SE**

(56) Entgegenhaltungen:
**EP-A- 0 150 790**
**DE-A- 2 732 308**
**DE-A- 2 752 955**
**DE-A- 3 109 978**
**DE-A- 3 230 757**
**DE-C- 849 997**

(73) Patentinhaber: **BASF Aktiengesellschaft,
Carl-Bosch-Strasse 38, D-6700 Ludwigshafen(DE)**

(72) Erfinder: **Uhl, Günter, Pfrimmanlage 55,
D-6520 Worms 1(DE)**
Erfinder: **Blum, Rainer, Bahnwasserstrasse 58,
D-6700 Ludwigshafen(DE)**
Erfinder: **Belde, Horst, Dubliner Strasse 21,
D-6700 Ludwigshafen(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Verfahren zur Herstellung von Pigmentdrucken und Pigmentfärbungen auf Textilien sind bekannt. Für das Bedrucken benötigt man Druckpasten, die als wesentliche Komponenten ein natürliches oder synthetisches Verdickungsmittel und/oder Benzin in emulgierter Form sowie übliche Hilfsstoffe enthalten. Die Färbeflotten unterscheiden sich von den Druckpasten im wesentlichen dadurch, daß sie kein Verdickungsmittel enthalten. Für beide Verfahren benötigt man jedoch ein Bindemittel, um die Pigmente an das mit den Druckpasten bedruckte bzw. mit den Flotten gefärbte Gewebe zu binden. Bei den Bindemitteln handelt es sich um wäßrige Dispersionen von Kunststoffen, die unter den Fixierbedingungen vernetzen und damit unlöslich werden. Diese sogenannten selbstvernetzenden wäßrigen Kunststoff-Dispersionen enthalten als charakteristische Monomere N-Methylolacrylamid, N-Methylolmethacrylamid oder die entsprechenden veretherten Monomeren einpolymerisiert. Eine andere Möglichkeit beim Textilpigmentdruck besteht darin, anstelle der selbstvernetzenden Kunststoff-Dispersionen andere Dispersionen einzusetzen und diese Bindemittel dann durch Zugabe von Harnstoff-Formaldehyd- bzw. Melamin-Formaldehyd-Harzen durch Erhitzen auf höhere Temperaturen während des Fixierens zu vernetzen. Beim Einsatz der genannten Bindemittel erfolgt die Fixierung der Drucke immer nur mit Heißluft bei relativ hoher Temperatur.

Aus der DE-OS 3 109 978 sind Textilpigmentdruckpasten bekannt, die neben einem Bindemittel, einem Pigment, einem Verdickungsmittel und gegebenenfalls weiteren üblichen Zusätzen als charakteristischen Bestandteil ein wasserunlösliches, flüssiges Polyisocyanat eines Molekulargewichts von 364 bis 4000 in einer Menge von 1 bis 8 Gew.-% enthalten. Diese Pigmentdruckpasten sind zwar länger als eine Woche haltbar, zeigen jedoch ein schlechtes Laufverhalten und setzen bereits nach kurzer Laufzeit die Druckschablonen zu.

Der vorliegenden Erfindung liegt die Aufgabe zugrunde, die Echtheiten von Pigmentfärbungen zu verbessern und Textilpigmentdruckpasten und Färbeflotten zur Verfügung zu stellen, bei denen auch andere als selbstvernetzende Kunststoff-Dispersionen als Binder eingesetzt werden können. Insbesondere sollen die Wasch- und Reibechtheiten der Pigmentfärbungen und Drucke sowie das Laufverfahren und die Stabilität der Druckpasten verbessert werden.

Die Aufgabe wird erfindungsgemäß dadurch gelöst, daß man feste, feinteilige Polyisocyanate, die einen Schmelzpunkt oberhalb von 25°C haben, deren mittlere Teilchengröße 0,5 bis 5 μm beträgt und deren Teilchenoberflächen durch Reaktion der darauf befindlichen Isocyanatgruppen mit gegenüber diesen Gruppen reaktiven Verbindungen desaktiviert sind, in Form von stabilen Dispersionen in einem flüssigen Dispersionsmedium als Vernetzer in einer Menge von 0,1 bis 6 Gew.-% in Textilpigmentdruckpasten und Färbeflotten verwendet.

Die Herstellung fester, feinteiliger Polyisocyanate, die einen Schmelzpunkt oberhalb von 25°C haben und deren Teilchenoberflächen durch Reaktion der darauf befindlichen Isocyanatgruppen mit gegenüber diesen Gruppen reaktiven Verbindungen desaktiviert sind, werden beispielsweise in der DE-OS 3 112 054, der DE-OS 3 228 670, der DE-OS 3 228 724, der DE-OS 3 228 723 und DE-OS 3 230 757 beschrieben. Diesem Stand der Technik liegt der Gedanke zugrunde, feste Polyisocyanate in mit Isocyanaten reaktionsfähigen Medien lagerstabil zu dispergieren und eine vorzeitige unerwünschte Reaktion der im Inneren der Teilchen enthaltenen Isocyanatgruppen mit dem Medium dadurch zu verhindern, daß die dispersen Isocyanate an ihrer Oberfläche desaktiviert sind bzw. gemäß der Terminologie in der DE-OS 3 230 757 eine retardierte Reaktivität besitzen. Diese Desaktivierung der Teilchenoberflächen bzw. Retardierung wird dadurch erreicht, daß nur die auf der Oberfläche der Teilchen befindlichen Isocyanatgruppen mit dem Desaktivierungsmittel reagieren und die im Inneren des Teilchens enthaltenen Polyisocyanatmoleküle an der Reaktion mit den Stoffen hindern, die bekanntermaßen mit Isocyanaten reagieren. Nach der Desaktivierung der Polyisocyanate erhält man durch Dispergieren der Teilchen in einem Dispersionsmedium direkt stabile Dispersionen.

Als feste feinteilige Polyisocyanate eignen sich diejenigen Stoffe, die einen Schmelzpunkt oberhalb von 25°C, vorzugsweise oberhalb von 40°C haben. Hierzu gehören aliphatische, araliphatische, aromatische und heterocyclische Polyisocyanate, Polyphenyl-polymethylen-polyisocyanate, die durch Anilin-Formaldehyd-Kondensation und anschließende Phosgenierung erhalten werden, perchlorierte Arylpolyisocyanate, Carbodiimidgruppen aufweisende Polyisocyanate, Allophanatgruppen aufweisende Polyisocyanate, Isocyanuratgruppen aufweisende Polyisocyanate, Urethan- oder Harnstoffgruppen aufweisende Polyisocyanate, acylierte Harnstoffgruppen aufweisende Polyisocyanate, Biuretgruppen aufweisende Polyisocyanate, durch Telomerisationsreaktion hergestellte Polyisocyanate, Estergruppen aufweisende Polyisocyanate, ferner bevorzugt Uretdiongruppen aufweisende Diisocyanate und Harnstoffgruppen aufweisende Diisocyanate. Als Beispiele für derartige geeignete Polyisocyanate seien genannt:

| | |
|---|---|
| p-Xylylendiisocyanat | Fp.: 45–46°C |
| 1,5-Diisocyanatomethylnaphthalin | 88–89°C |
| 1,3-Phenylendiisocyanat | 51°C |
| 1,4-Phenylendiisocyanat | 94–96°C |
| 1-Methylbenzol-2,5-diisocyanat | 39°C |
| 1,3-Dimethylbenzol-4,6-diisocyanat | 70–71°C |
| 1,4-Dimethylbenzol-2,5-diisocyanat | 76°C |
| 1-Nitrobenzol-2,5-diisocyanat | 59–61°C |
| 1,4-Dichlorbenzol-2,5-diisocyanat | 134–137°C |
| 1-Methoxybenzol-2,4-diisocyanat | 75°C |
| 1-Methoxybenzol-2,5-diisocyanat | 89°C |
| 1,3-Dimethoxybenzol-4,6-diisocyanat | 125°C |
| Azobenzol-4,4'-diisocyanat | 158–161°C |
| Diphenylether-4,4'-diisocyanat | 66–68°C |
| Diphenylmethan-4,4'-diisocyanat | 42°C |
| Diphenyl-dimethylmethan-4,4'-diisocyanat | 92°C |
| Naphthalin-1,5-diisocyanat | 130–132°C |
| 3,3'-Dimethylbiphenyl-4,4-diisocyanat | 68–69°C |
| Diphenyldisulfid-4,4'-diisocyanat | 58–60°C |
| Diphenylsulfon-4,4'-diisocyanat | 154°C |
| 1-Methylbenzol-2,4,6-triisocyanat | 75°C |
| 1,3,5-Trimethylbenzol-2,4,6-triisocyanat | 93°C |
| Triphenylmethan-4,4',4''-triisocyanat | 89–90°C |
| 4,4'-Diisocyanato-(1,2)-diphenyl-ethan | 88–90°C |
| dimeres 1-Methyl-2,4-phenylendiisocyanat | 156°C |
| dimeres 1-Isopropyl-2,4-phenylendiisocyanat | 125°C |
| dimeres 1-Chlor-2,4-phenylendiisocyanat | 177°C |
| dimeres 2,4'-Diisocyanato-diphenylsulfid | 178–180°C |

dimeres Diphenylmethan-4,4'-diisocyanat
3,3'-Diisocyanato-4,4'-dimethyl-N,N'-diphenylharnstoff
N,N'-Bis/4(4-Isocyanatophenylmethyl)phenyl/harnstoff
N,N'-Bis/4(2-Isocyanatophenylmethyl)phenyl/harnstoff.

Besonders bevorzugt werden 1,5-Naphthalin-diisocyanat, 3,3'-Diisocyanato-4,4'-dimethyl-N,N'-diphenylharnstoff, dimeres 1-Methyl-2,4-diisocyanatobenzol, dimeres 4,4'-Diisocyanato-diphenylmethan und 3,3'-Dimethyl-4,4'-diisocyanato-diphenyl eingesetzt.

Die Polyisocyanate können mit den Methoden desaktiviert werden, die in den oben angegebenen DE-OSen beschrieben sind. Zur Desaktivierung eignen sich beispielsweise Verbindungen mit Hydroxylgruppen, Carboxylgruppen, Amidgruppen und Mercaptangruppen. Verbindungen dieser Art bilden auf der Oberfläche der Polyisocyanatteilchen eine Art Polymerumhüllung, indem sie selektiv mit den Isocyanatgruppen reagieren, die sich auf der Teilchenoberfläche befinden. Dadurch wird die Polymerumhüllung fest an die Polyisocyanatteilchen gebunden, ohne daß dabei wesentliche Anteile der insgesamt vorhandenen Isocyanatgruppen in den Polyisocyanatteilchen verbraucht werden. Besonders geeignet zur Desaktivierung der Isocyanatgruppen an der Oberfläche der Polyisocyanatteilchen sind Reaktionen, die die Isocyanatgruppen zu Harnstoff bzw. Polyharnstoff-Strukturen umwandeln. Solche Desaktivierungsmittel sind beispielsweise Wasser und primäre oder sekundäre Amine. Zur Desaktivierung der Teilchenoberflächen der Polyisocyanate können auch zwei- oder mehrfunktionelle, nieder- oder höhermolekulare Verbindungen mit aliphatisch gebundenen, primären und/oder sekundären Aminogruppen und/oder –CO.NH.NH₂-Endgruppen und/oder Hydrazine mit einem Molekulargewicht von 32 bis etwa 60000, vorzugsweise 60 bis 3000, eingesetzt werden. Es sind dies z.B. niedermolekulare und/oder höhermolekulare primäre und/oder sekundäre Polyamine, vorzugsweise Diamine. Die Aminogruppen sind dabei im allgemeinen an aliphatische Gruppen, an cycloaliphatische Gruppen, oder an den aliphatischen Rest von araliphatischen Gruppen gebunden. Weiterhin können Hydrazin (meist in Form von Hydrazin-

3

hydrat), oder Alkyl-substituierte Hydrazine wie N,N-Dimethylhydrazin eingesetzt werden. Zur Desaktivierung der Oberfläche der Polyisocyanate eignen sich außerdem Verbindungen mit Hydrazin-Endgruppen, z.B. Dihydrazide, wie Oxalsäuredihydrazid, Adipinsäuredihydrazid, Terephthalsäuredihydrazid oder Verbindungen mit Hydrazid und Semicarbazid-, Carbazinester- oder Aminogruppen, z.B. β-Semicarbazidoalanylhydrazid, 2-Semicarbazidoethylencarbazinester, Aminoessigsäurehydrazid, β-Aminopropionsäurehydrazid oder Ethylen-bis-carbazinester bzw. Ethylen-bis-semicarbazid, sowie Polyhydrazide, die durch Hydrazinolyse von Polyacrylaten erhalten werden und deren Herstellung z.B. von M. Hartmann, R. Dowbenko, U.T. Hockswender in Organic Coating + Applied Polymer Science 46, 1982, Seite 429 und 432 beschrieben wird. Bevorzugt sind jedoch aliphatische bzw. cycloaliphatische Di- und Polyamine, die gegebenenfalls neben den Aminogruppen auch noch OH-Gruppen, tertiäre Aminogruppen, Ethergruppen, Thioethergruppen, Urethangruppen oder Harnstoffgruppen aufweisen können.

Vorzugsweise werden folgende Di- und Polyamine verwendet: Ethylendiamin, 1,2- und 1,3-Propandiamin, 1,4-Butandiamin, 1,6-Hexandiamin, Neopentandiamin, 2,2,4- und 2,4,4-Trimethyl-1,6-diaminohexan, 2,5-Dimethyl-2,5-diaminohexan, 1,10-Decandiamin, 1,11-Undecandiamin, 1,12-Dodecandiamin, Bis-aminomethyl-hexahydro-4,7-methano-indan (TCD-Diamin), 1,3-Cyclohexandiamin, 1,4-Cyclohexandiamin, 1-Amino-3,3,5-trimethyl-5-aminomethylcyclohexan (Isophorondiamin), 2,4- und/oder 2,6-Hexahydrotoluylendiamin, 2,4'- und 4,4'-Diaminodicyclohexylmethan, m- oder p-Xylylendiamin, Bis-(3-aminopropyl)-methylamin, Bis-N,N'-(3-aminopropyl)-piperazin, Diaminoperhydroanthrazene und 1-Amino-2-aminomethyl-3,3,5-(3,5,5)-trimethylcyclopentan, 2,2-Dialkylpenten-1,5-diamine oder Triamine wie 1,5,11-Triaminoundecan, 4-Aminomethyl-1,8-diaminooctan, Lysinmethylester, cycloaliphatische Triamine gemäß DE-OS 2 614 244, 4,7-Dioxadecan-1,10-diamin, 2,4- und 2,6-Diamino-3,5-diethyl-1-methylcyclohexan und deren Gemische, alkylierte Diaminodicyclohexylmethane, z.B. 3,3'-Dimethyl-5,5'-diamino-dicyclohexylmethan oder 3,5-Diisopropyl-3',5'-diethyl-4,4'-diaminodicyclohexylmethan, perhydrierte Diaminonaphthaline, perhydrierte Diaminoanthrazene oder höherwertige Amine wie Diethylentriamin, Triethylentetramin, Pentaethylenhexamin, Dipropylen-triamin, Tripropylentetramin oder N,N'-Dimethylethylendiamin, 2,5-Dimethylpiperazin, 2-Methylpiperazin, Piperazin(hydrat) und 2-Hydroxyethylpiperazin.

Neben diesen niedermolekularen Diaminen oder im Gemisch mit diesen können auch höhermolekulare Di- und Polyamine verwendet werden, wie sie z.B. durch Aminieren von Polyoxyalkylenglykolen mit Ammoniak gemäß der BE-PS 634 741 oder der US-PS 3 654 370 erhältlich sind.

Weitere sehr gut geeignete höhermolekulare Polyamine sind die durch Polykondensation aus Polycarbonsäuren, z.B. polymerer Leinölfettsäure mit einem Überschuß an Di- und Triaminen hergestellten handelsüblichen Stoffe. Diese höhermolekularen Polyamine besitzen Molekulargewichte von etwa 400 bis 6000, vorzugsweise 400 bis 3000. Infolge ihres Aufbaus sind derartige höhermolekulare Polyamine zur Ausbildung einer nicht-brüchigen, "elastischen" Polyharnstoffumhüllung besonders geeignet. Sie werden daher, vorzugsweise in Mischung mit den niedermolekularen Di- und Polyaminoverbindungen, zur Desaktivierung der Oberfläche der Polyisocyanatteilchen eingesetzt. Selbstverständlich können beliebige Kombinationen der genannten Amin-, Hydrazin- und Hydrazid-Verbindungen verwendet werden, um z.B. nachteilige Nebeneffekte eines Amines durch entsprechende Vorteile anderer Amine auszugleichen (z.B. nieder- und höhermolekulare Diamine in gemeinsamer Anwendung) oder um möglichst viele vorteilhafte Nebeneffekte zu vereinigen. In Frage kommen z.B. Kombinationen von schnell reagierenden Aminen wie z.B. Ethylendiamin mit durch sterische Hinderung verlangsamten Aminen oder von niedermolekularen Aminen oder Hydrazinen mit hochmolekularen Aminen wie z.B. aliphatischen Aminopolyethern.

Um die Desaktivierung zu steuern und zu beschleunigen, können auch Katalysatoren zugegeben werden. Bevorzugt sind Katalysatoren, die selektiv die Desaktivierung beschleunigen. Die Desaktivierungskatalysatoren können aber auch identisch sein mit den später die bestimmungsgemäße wärmeaktivierte Reaktion beschleunigenden oder steuernden Katalysatoren.

Die festen, feinteiligen Polyisocyanate können praktisch in jedem beliebigen flüssigen Dispersionsmedium dispergiert werden, z.B. in Alkoholen, Polyolen, Aminen, Ethern, Ketonen, Estern, Carbonsäuren, aliphatischen oder aromatischen Kohlenwasserstoffen, halogenierten Kohlenwasserstoffen und Wasser. Für die erfindungsgemäße Verwendung der feinteiligen Polyisocyanate verwendet man bevorzugt als Dispersionsmedium Paraffinöl, Benzin eines Siedebereichs von 140 bis 250°C, Xylol, Toluol oder Wasser. Das Dispersionsmedium kann ebensogut auch als Desaktivierungsmittel bezeichnet werden, sofern es mit den Isocyanatgruppen reagiert. Das bedeutet, daß die mit Isocyanatgruppen reagierenden Dispersionsmedien gleichzeitig auch als Desaktivierungsmittel angesehen werden können. An das Dispersionsmedium wird lediglich die Forderung gestellt, daß es bei Temperaturen oberhalb von 20°C flüssig ist.

Die bekannten feinteiligen Polyisocyanat-Dispersionen haben eine sehr breite Teilchengrößenverteilung und sind in dieser Form für den Einsatz in Textilpigmentpasten oder Färbeflotten nicht geeignet. Sie können jedoch sehr leicht in eine geeignete Form überführt werden, indem man diese bekannten Polyisocyanat-Dispersionen auf eine mittlere Teilchengröße von 0,1 bis 15, vorzugsweise 0,5 bis 5 µm bringt (bestimmt mit der Scheibenzentrifuge nach Joice Label). Die Herstellung derartig feinteiliger Polyisocyanat-Dispersionen gelingt sehr einfach, indem man die bekannten Dispersionen einer Feindispergierung oder Mahlung unterwirft. Hierfür eignen sich beispielsweise schnell-laufende Dissolver- oder Dispergiergeräte vom Rotor/Startor-Typ oder Rührwerkskugelmühlen, Perl- und Sandmühlen, Kugelmühlen und Reibspaltmühlen. Vorzugsweise erhält man die erfindungsgemäß zu verwendenden feinteiligen Polyisocyanat-Dispersionen durch Vermahlen von desaktivierten festen, feinteiligen Polyisocyanaten. Falls das Vermahlen der Polyisocyanate in Gegenwart von Stoffen vorgenommen wird, die mit Isocyanatgruppen reagieren, darf die Temperatur beim Mahlen 50°C nicht überschreiten. Vorzugsweise erfolgt das Mahlen in dem Temperaturbereich von 0 bis 40, insbesondere 10 bis 40°C. Beim Mahlen kann man zusätzlich grenzflächenaktive Stoffe bzw. Schutzkolloide verwenden, um besonders stabile Polyisocyanat-Dispersionen herzustellen. Geeignete grenzflächenaktive Stoffe sind übliche anionische, kationische oder neutrale Tenside, z.B. Sorbitanfettsäureester, Polyoxyethylensorbitan-Fettsäureester, Arylsulfonate, Alkalisalze höherer Fettsäuren, oxethylierte Amine, wie oxethyliertes Oleylamin, Sulfobernsteinsäureester, Soja-Lecithin, ethoxylierte Fettsäureester, propoxylierte Fettsäureester, sowie Kondensationsprodukte aus Phenolsulfonsäuren, Harnstoff und Formaldehyd. Außerdem kann man viskositätsregelnde Stoffe, wie Celluloseether, Methylcellulose, polymere Säuren und Salze polymerer Säuren (z.B. Polyacrylsäure), natürliche und synthetische Polysaccharide und Eiweißprodukte, kationische Stärke, Polyacrylamide, Polyvinylalkohole und Polyvinylether verwenden.

Beim Erhitzen der feinteiligen Polyisocyanat-Dispersionen auf höhere Temperaturen, z.B. auf Temperaturen oberhalb von 60°C wird die Desaktivierung der Oberfläche der Polyisocyanatteilchen aufgehoben und es kommt zu einer Reaktion der Polyisocyanate mit den Verbindungen, die damit reagieren.

Die genannten Polyisocyanat-Dispersionen werden zu Textilpigmentdruckpasten und Färbeflotten in einer Menge, bezogen auf den Feststoffgehalt, der Isocyanatdispersionen von 0,1 bis 6,0, vorzugsweise 0,2 bis 1,2 Gew.-% eingesetzt.

Die Pigmentdruckpasten können als Bindemittel die üblicherweise verwendeten selbstvernetzenden wäßrigen Kunststoff-Dispersionen enthalten. Wie bereits oben ausgeführt, handelt es sich hierbei um Emulsionspolymerisate, die als selbstvernetzende Monomere N-Methylolacrylamid, N-Methylolmethacrylamid oder die entsprechenden veretherten Monomere einpolymerisiert enthalten. Dispersionen dieser Art sind im Handel erhältlich. Sie enthalten als hauptsächliche Monomere Styrol und Acrylester bzw. Vinylacetat und Acrylsäure oder Methacrylsäureester bzw. auch Styrol und Butadien oder Butadien und Acrylsäureester einpolymerisiert. Die selbstvernetzenden filmbildenden Copolymerisate können zur Modifizierung eine ethylenisch ungesättigte $C_3$ bis $C_5$-Carbonsäure, z.B. Acrylsäure, Methacrylsäure, Crotonsäure, Maleinsäure oder Fumarsäure in einer Menge von 0,5 bis 10 Gew.-% einpolymerisiert enthalten oder als weitere Comonomere Vinylether, Vinylketone, Vinylchlorid, Vinylidenchlorid, Vinylpropionat und/oder Acrylnitril einpolymerisiert enthalten. Die selbstvernetzenden Copolymerisate sind als Bindemittel in einer Menge von 0,45 bis 25, vorzugsweise 2,4 bis 12 Gew.-%, bezogen auf den Feststoffgehalt der Dispersion, in den Druckpasten bzw. Färbeflotten enthalten. Üblicherweise werden 3 bis 35 Gew.-% einer 15 bis 55 Gew.-%igen wässrigen Dispersion eines mindestens unter Fixierbedingungen (100 bis 200°C) filmbildenden Polymerisats als Bindemittel eingesetzt. Die selbstvernetzenden Polymerisate enthalten 0,3 bis 12, vorzugsweise 1,5 bis 6 Gew.-% an Monomeren einpolymerisiert, die mit Isocyanatgruppen reagieren. Hierbei handelt es sich um N-Methylolgruppen sowie Carboxylgruppen.

Ein Vorteil der vorliegenden Erfindung ist darin zu sehen, daß man nicht mehr allein auf die selbstvernetzenden filmbildenden Bindemittel, die bisher für den Pigmentdruck verwendet wurden, angewiesen ist, sondern außerdem oder in Mischung mit diesen bekannten selbstvernetzenden Bindemitteln Polymerisate einsetzen kann, die funktionelle Gruppen enthalten, die mit Isocyanaten reagieren. In Betracht kommen beispielsweise als Bindemittel für diese Pigmentdruckpasten Polymere, die folgende funktionelle Gruppen aufweisen: Hydroxyl-, Carboxyl-, Carbonamid-, NH- und $NH_2$-Gruppen. Damit eine ausreichende Vernetzung bei der Fixierung der Textildruckpasten erfolgt, müssen diese Gruppen zu 0,3 bis 12, vorzugsweise 1,5 bis 6 Gew.-% in das Bindemittel eingebaut sein. Monomere mit funktionellen Gruppen sind beispielsweise Acrylsäure, Acrylamid, Hydroxyethylacrylat, Hydroxypropylacrylat, Butandiolmonoacrylat, Methacrylsäure, Crotonsäure, Itakonsäure und alle den genannten Derivaten der Acrylsäure analogen Derivate der Methacrylsäure, der Crotonsäure und der Itakonsäure. Aus diesen Monomeren, die miteinander copolymerisierbar sind, ist eine große Anzahl von Bindemitteln herstellbar, die erfindungsgemäß mit den Polyisocyanat-Dispersionen vernetzt werden können. Geeignet sind beispielsweise Polyacrylsäuren, Polymethacrylsäuren, Copolymerisate aus Acrylsäure und Acrylsäureestern, Copolymerisate aus Acrylamid und Acrylsäure, Copolymerisate aus Acrylamid und Hydroxyethylacrylat. Diese Copolymerisate können mit anderen Monomeren, die damit copolymerisierbar sind und keine funktionellen Gruppen enthalten, die mit Isocyanatgruppen reagieren, copolymerisiert werden. Die funktionelle Gruppen enthaltenden Bindemittel brauchen im Gegensatz zu den herkömmlichen selbstvernetzenden Bindemitteln nicht in Form von Dispersionen vorzuliegen, sie können zwar als Dispersion eingesetzt werden, ebensogut ist es jedoch auch möglich, wäßrige Lösungen dieser Bindemittel zu verwenden. Diese Bindemittel sollten soviele polare Gruppen enthalten, daß sie ohne ein Hilfsmittel in Wasser dispergiert oder gelöst werden können. Geeignet ist z.B. Polyvinylalkohol, teilverseiftes Polyvinylacetat, Hydroxyethylcellulose und Hydroxymethylcellulose.

Ein weiterer wesentlicher Bestandteil der Pigmentdruckpasten sind die üblicherweise in Betracht kommenden Pigmente, die beispielsweise dem Color-Index entnommen werden können. Die Pigmente sind in den Druckpasten bzw. Färbeflotten in einer Menge von 0,01 bis 40, vorzugsweise 1 bis 25 Gew.-% vorhanden. Prinzipiell kann man alle unlöslichen anorganischen und organischen farbigen Substanzen, die üblicherweise als Pigment verwendet werden, einsetzen. Bekannte Pigmente sind beispielsweise Titandioxid und Ruß. Bei den Pigmentfärbungen liegt die Einsatzmenge an Pigmentfarbstoff zwischen 0,01 bis 4, vorzugsweise 0,1 bis 1,5 Gew.-%.

Wesentlicher Bestandteil von Textilpigmentdruckpasten sind Verdickungsmittel. Hierbei handelt es sich um natürliche oder synthetische Verdickungsmittel bzw. um Benzinemulsionen. Natürliche Verdickungsmittel sind beispielsweise Tragant, Alginate, Johannisbrotkernmehl und Carragheenmoos.

Geeignete synthetische Verdickungsmittel sind hochmolekulare Polymerisate auf Basis ethylenisch ungesättigter C#- bis C⅙-Carbonsäuren, insbesondere der Acrylsäure. Diese Polymerisate können geringe Mengen eines ethylenisch ungesättigten Monomeren mit zwei Doppelbindungen einpolymerisiert enthalten. Außerdem eignen sich hierfür Copolymerisate aus Ethylen und Maleinsäureanhydrid sowie Mischungen verschiedener synthetischer Verdickungsmittel. Die Verdickungsmittel sind in den Pigmentdruckpasten in einer Menge von 0 bis 16, vorzugsweise 0,55 bis 2,0 Gew.-% vorhanden. Sofern die Pigmentdruckpasten Benzin in emulgierter Form als Verdickungsmittel enthalten, beträgt die Menge an Benzin 50 bis 70 Gew.-%. Es ist selbstverständlich noch möglich, Mischungen aus einem synthetischen Verdickungsmittel und einer Benzinemulsion bzw. einer Mischung aus einem natürlichen Verdickungsmittel und einer Benzinemulsion einzusetzen. Die Druckpasten und Färbeflotten enthalten außer den oben angegebenen Bestandteilen zur Ergänzung auf 100 Gew.-% Wasser, wobei die Summe der Prozentangaben jeweils 100 beträgt.

Die wäßrigen Färbeflotten enthalten in aller Regel kein Verdickungsmittel. Als weitere übliche Zusätze zu Druckpasten und Färbeflotten seien Emulgatoren, Weichmacher, Silikonöle, Kieselsäureester, Harnstoff, Glykole, Harnstoff-Formaldehyd- und Melamin-Formaldehyd-Harze genannt. Diese Stoffe können in einer Menge bis zu 10 Gew.-% in den Druckpasten bzw. Färbeflotten enthalten sein.

Die Druckpasten werden durch Mischen der einzelnen Bestandteile erhalten. Hierbei kann man so vorgehen, daß man zunächst eine Emulsionsverdickung herstellt, indem man beispielsweise ein festes synthetisches Verdickungsmittel und einen Emulgator in Wasser einrührt, quellen oder sich auflösen läßt und gegebenenfalls anschließend Schwerbenzin unter Rühren einemulgiert. Hierzu gibt man dann ein Bindemittel und die erfindungsgemäß zu verwendende Polyisocyanat-Dispersion hinzu. Man erhält dann eine Paste, in die der Pigmentfarbstoff eingerührt wird. Die Paste kann mit Wasser verdünnt und gegebenenfalls mit weiteren Zusätzen verrührt werden. Falls die Viskosität der Paste zu niedrig ist, wird weiteres Verdickungsmittel zugesetzt. Die Druckpasten können mit Hilfe der üblichen Druckverfahren angewendet werden. Es handelt sich hierbei beispielsweise um den Rouleaux-Druck, Siebdruck, Filmdruck und Rotationsfilmdruck. Mit den Druckpasten werden Textilien bedruckt, die entweder als Gewebe, Gewirke oder als Faservlies aus beliebigen natürlichen, synthetischen oder halbsynthetischen Fasern vorliegen. Hierbei kann es sich um textile Materialien aus Wolle, Baumwolle, Leinen, Zellwolle, Seide, Kunstseide, Polyester, Polyamid, Polyacrylnitril oder Mischungen dieser Faserarten handeln. In gleicher Weise werden die Pigmentfärbeflotten angewendet. Im Anschluß an den Druckvorgang erfolgt das Fixieren der Druckpasten auf dem bedruckten Material durch eine Wärmebehandlung bei Temperaturen um 100°C. Das Fixieren kann sowohl mit Dampf als auch mit Heißluft erfolgen. Die Verwendung von überhitztem Dampf ist nicht erforderlich, jedoch möglich. Der Fixiervorgang benötigt etwa 3 bis 6 Minuten. Ein Fixieren ist selbstverständlich auch für Pigmentfärbungen erforderlich. Sowohl beim Bedrucken als auch beim Färben erreicht man gegenüber dem Stand der Technik höhere Echtheiten. Die Polyisocyanat-Dispersionen in der Druckpaste bzw. der Färbeflotte wirken als Vernetzer und reagieren mit den löslichen Bestandteilen der Druckpaste, die funktionelle Gruppen aufweisen, die mit Isocyanaten reagieren. Die Druckpasten können auch nach wochenlanger Lagerung noch verwendet werden und zeigen ein gutes Laufverhalten beim Drucken. Im Gegensatz zu den bekannten, flüssige Isocyanate enthaltenden Druckpasten verstopfen die erfindungsgemäßen Pigmentdruckpasten nicht die Druckschablonen.

Die in den Beispielen angegebenen Teile sind Gewichtsteile, die Angaben in Prozent beziehen sich auf das Gewicht der Stoffe.

Vernetzer 1

30 g pulverförmiger über Urethdiongruppen dimerisiertes Toluylendiisocyanat, 4 g eines handelsüblichen Polyamidoamins mit einer Aminzahl von 400 und 66 g Paraffinöl werden bei Raumtemperatur gemischt und eine Stunde in einer Rührwerkskugelmühle bei einer Temperatur von 20 bis 25°C mit Hartglasperlen des Durchmessers von 0,6 bis 0,8 mm gerührt. Man erhält eine stabile feinteilige Polyisocyanat-Dispersion, deren Teilchenoberflächen desaktiviert sind und die eine Teilchengröße in dem Bereich von 0,9 bis 1,5 μm haben. Der Schmelzpunkt des Polyisocyanats liegt bei ca. 170°C.

Vernetzer 2

1653 Teile eines handelsüblichen Polyamidoamins mit einer Aminzahl von 400 werden in 4500 Teilen Wasser gelöst. Man gibt 5500 Teile pulverförmiges, über Urethdiongruppen dimerisiertes Toluylendiisocyanat (Schmelzpunkt ca. 170°C) zu und erhält unter der Einwirkung des Scherfelds in einem Dissolver innerhalb von 4 Minuten eine stark sedimentierende wäßrige Polyurethan-Dispersion.

2500 Teile der wäßrigen Polyisocyanat-Dispersion werden mit einer Lösung von 4 Teilen eines handelsüblichen Polysaccharids mit hohem Molekulargewicht, 117 Teilen eines handelsüblichen Kondensationsprodukts aus Phenolsulfonsäure, Harnstoff und Formaldehyd in 1272 Teilen Wasser vereinigt und 20 Minuten bei einer Temperatur von 20 bis 25°C in einer gekühlten offenen Rührwerkskugelmühle nachdispergiert. Dadurch erhält man eine Dispersion mit einer stark verringerten durchschnittlichen Teilchengröße, die in dem Bereich von 0,5 bis 2 µm liegt.

Beispiel 1

In 76 Teile einer Öl-in-Wasser-Emulsion, die durch Einemulgieren von 75% Benzin (Siedebereich 140 bis 220°C) in eine Lösung von 1% Hydroxyethylcellulose, 1% Diethylenglykol und 1% eines Anlagerungsproduktes von 12 Mol Ethylenoxid an 1 Mol p-Benzyl-o-Phenylphenol in 22% Wasser erhalten wurde, rührt man nacheinander folgende Bestandteile ein. 1 Teil Silikonöl einer Viskosität von 5000 mPa·s, 14 Teile einer 40%igen wäßrigen Dispersion eines Mischpolymerisats aus 86% Butylacrylat, 3% Acrylamid, 10% Acrylnitril und 1% Hydroxyethylacrylat, 3 Teile einer 35%igen wäßrigen Aufbereitung des gelben Pigmentfarbstoffs der Color-Index-Nr. 21108 und 6 Teile des Vernetzers 2. Ein Mischgewebe aus Baumwolle-Polyester wird anschließend im Flachfilmdruck mit der oben beschriebenen Druckpaste bedruckt, getrocknet und 5 Minuten bei einer Temperatur von 140°C mit Heißluft fixiert. Man erhält Drucke mit sehr guten Echtheiten.

Beispiel 2

1,5 Teile eines mit Ammoniak neutralisierten hochmolekularen Mischpolymerisats aus 95% Acrylsäure und 5% Acrylamid in Benzin werden in 79,3 Teile Wasser eingerührt. In die so erhaltene Verdickung trägt man dann unter Rühren nacheinander folgende Bestandteile ein:
2 Teile Tris-Stearylzitrat,
12 Teile einer 40%igen, wäßrigen Dispersion eines Mischpolymerisats aus 40% Acrylsäurebutylester, 52,5% Acrylsäureethylester, 3% Hydroxypropylacrylat und 4,5% N-Methylolmethacrylamid,
0,5 Teile Talgfettalkohol, der mit 25 Mol Ethylenoxid umgesetzt ist,
1 Teil Ethylhexylphthalat,
2,5 Teile des 35%igen wäßrigen Pigmentteigs der Color-Index-Nr. 60005 (violettes Pigment)
1,2 Teile des Vernetzers 2.
Ein mit dieser Paste in üblicher Weise bedruckter Baumwoll-Batist zeigt nach einer Trocknungszeit von 3 Minuten bei 130°C sehr gute Echtheiten.

Beispiel 3

In 83,5 Teile einer 4,5%igen wäßrigen mit Ammoniak neutralisierten Verdickung eines hochmolekularen 25%igen Mischpolymerisats aus 92% Acrylsäure und 8% Acrylamid gibt man unter Rühren
12 Teile einer wäßrigen Mischpolymerisat-Dispersion, die 93% Butylacrylat, 3% Acrylnitril und 1% Acrylsäure und 3% N-Methylolmethacrylamid einpolymerisiert enthält,
2,5 Teile eines 36%igen wäßrigen orangefarbenen Farbstoffteigs des Pigments der Color-Index-Nr. 21115 und
2 Teile des Vernetzers 2. Mit dieser Druckpaste wird ein Baumwollgewebe im Rouleaux-Druck bedruckt, anschließend getrocknet und 60 Sekunden mit Heißdampf von 160°C fixiert. Man erhält einen Druck mit guten Echtheiten.

Beispiel 4

0,75 Teile eines Ethylen-Maleinsäure-Mischpolymerisats mit einem Molekulargewicht von mehr als 500.000 werden in
80,35 Teile Wasser eingerührt. Dazu gibt man dann
1,0 Teile einer 25%igen wäßrigen Ammoniaklösung und rührt anschließend nacheinander folgende Bestandteile ein:
14 Teile einer 40%igen wäßrigen Dispersion eines Mischpolymerisats aus 87% Butylacrylat, 10% Acrylnitril und 3% Hydroxypropylacrylat,
1,4 Teile des Vernetzers 2 und 2,5 Teile einer 35%igen wäßrigen Aufbereitung des roten Pigmentfarbstoffs der Color-Index-Nr. 12370.
Mit dieser Druckpaste wird dann ein Zellwollgewebe bedruckt. Der Druck wird getrocknet und dann 3 Minuten bei 100°C mit Heißluft fixiert. Man erhält einen Druck mit sehr guten Echtheiten.

Beispiel 5

0,65 Teile einer teilvernetzten hochmolekularen Polyacrylsäure werden in 80,35 Teile Wasser eingerührt und mit Ammoniak neutralisiert. In die so erhaltene Verdickung rührt man nacheinander folgende Bestandteile ein:
13 Teile einer 50%igen wäßrigen Dispersion eines Copolymerisats aus 82,5% Butylacrylat, 10%

Ethylacrylat, 3% Acrylnitril, 1% Acrylsäure und 3,5% N-Methylolmethacrylamid,
0,5 Teile eines mit 20 Mol Ethylenoxid umgesetzten Bis-2,4-xylenolglycerin-ethers,
1 Teil Silikonöl,
3 Teile eines 30%igen wäßrigen Farbstoffteigs von Kupferphthalo-cyaningrün und zum Schluß
1,5 Teile des Vernetzers 1.

Mit dieser Druckpaste wird in an sich bekannter Weise auf einer Flachfilmdruckmaschine ein Polyamidgewebe bedruckt, getrocknet und 4 Minuten bei 100°C fixiert. Man erhält einen Druck mit guten Echtheiten.

Beispiel 6

200 Teile einer 30%igen wäßrigen Lösung eines Polymeren aus 75,8% Butylacrylat, 14,2% Acrylsäure und 10% Hydroxypropylacrylat (K-Wert des Polymeren von 20, bestimmt nach Fikentscher bei 250°C in 1%iger wäßriger Lösung) mischt man mit 35 Teilen Wasser und 25 Teilen einer 90%igen wäßrigen Lösung von Bis-2,4-Xylenolglycerinether, der mit 20 Mol Ethylenoxid pro Mol umgesetzt ist. In diese Mischung emulgiert man 740 Teile Benzin des Siedebereichs 140 bis 220°C.

In 93,5 Teile der so erhaltenen hochviskosen Emulsion rührt man nacheinander 2,5 Teile eines 36%igen wäßrigen Farbstoffteigs des orangefarbenen Pigmentfarbstoffs der Color-Index-Nr. 71105 und 4 Teile des Vernetzers 2.

Mit der so erhaltenen Druckpaste bedruckt man ein Baumwollgewebe, trocknet es bei 80°C und fixiert den Druck 5 Minuten bei 130°C mit Heißluft. Man erhält einen Druck mit guten Echtheiten.

Beispiel 7

Zu 9 Teilen einer 60%igen wäßrigen Aufbereitung von polyacrylsaurem Ammonium mit einem Molekulargewicht von 3 000 000 gibt man
20 Teile einer 10%igen wäßrigen Lösung von Polyvinylalkohol und 0,5 Teile eines mit 20 Mol Ethylenoxid umgesetzten Laurylalkohols.

In diese Verdickung trägt man unter Rühren 2 Teile einer wäßrigen Anteigung des orangefarbenen Pigmentfarbstoffs der Color-Index-Nr. 71105, 3,75 Teile des Vernetzers 2 und 64,75 Teile Wasser ein. Anschließend wird mit dieser Druckpaste ein Baumwoll/Polyester-Mischgewebe im Filmdruck bedruckt, bei 80°C getrocknet und 6 Minuten bei einer Temperatur von 130°C mit Heißluft fixiert. Man erhält einen Druck mit guten Echtheiten.

Beispiel 8

In 40 Teile einer 3%igen wäßrigen im Handel erhältlichen hochmolekularen Hydroxyethylcellulose rührt man folgende Bestandteile nacheinander ein:
3 Teile einer 40%igen Aufbereitung von Kupferphthalocyaninblau der Color-Index-Nr. 74160,
3,75 Teile des Vernetzers 2 und 53,75 Teile Wasser.

Mit der so erhaltenen Druckpaste wird anschließend ein Baumwollköper im Rotationsfilmdruck bedruckt, bei 80°C getrocknet und 5 Minuten lang mit Heißluft bei einer Temperatur von 120°C fixiert. Man erhält einen Druck mit guten Echtheiten.

Beispiel 9

In 42 Teile einer 5%igen wäßrigen Verdickung eines handelsüblichen Kernmehlethers rührt man nacheinander folgende Bestandteile ein:
2,5 Teile einer 32%igen Anteigung von Phthalocyaningrün der Color-Index-Nr. 74260
1 Teil Ricinusöl
3,5 Teile des Vernetzers 2 und 51 Teile Wasser.

Die so erhaltene Druckpaste wird im Filmdruck auf einen Baumwollsatin in bekannter Weise aufgedruckt. Der Druck wird dann bei 80°C getrocknet und anschließend mit Heißluft bei einer Temperatur von 140°C innerhalb von 5 Minuten fixiert. Man erhält einen Druck mit guten Echtheiten.

Beispiel 10

Zu 18 Teilen Wasser gibt man ein Teil Bis-2,4-Xylenolglycerinether, der 18 Mol Ethylenoxid angelagert enthält und 20 Teile einer 25%igen wäßrigen Lösung von Polycaprolactam, dessen Stickstoffe mit durchschnittlich 3,2 Mol Ethylenoxid umgesetzt sind und ein Molekulargewicht von etwa 2000 hat. Unter Verwendung eines hochtourigen Rührers mischt man in diese Lösung 61 Teile Benzin vom Siedebereich 140 bis 220°C. Man erhält auf diese Weise eine hochviskose Emulsion.

In 93,5 Teile der oben beschriebenen Emulsion rührt man 2,5 Teile eines 40%igen wäßrigen Farbstoffteiges des roten Pigmentfarbstoffs der Color-Index-Nr. 12385 und 4 Teile des Vernetzers 2 ein.

Mit der so hergestellten Druckpaste bedruckt man im Flachfilmdruck einen Baumwollbatist, trocknet das bedruckte Material und fixiert den Druck innerhalb von 6 Minuten mit Heißdampf bei 170°C. Man erhält einen Druck mit guten Echtheiten.

Beispiel 11

8 Teile eines mit Stearinsäure modifizierten Epoxid-Amin-Adduktes vom Molekulargewicht 3000 und einer Basenzahl von 120 mg KOH pro Gramm Festprodukt werden mit Essigsäure neutralisiert, dann mit 1 Teil eines mit 18 Mol Ethylenoxid umgesetzten Bis-2,4-xylenolglycerinethers und 25,3 Teilen Wasser vermischt. In diese Mischung emulgiert man anschließend unter hochtourigem Rühren 65,7 Teile Benzin vom Siedebereich 140 bis 220°C ein. Man erhält eine hochviskose Emulsion.

In 93,5 Teile der so erhaltenen Emulsion rührt man nacheinander 4,5 Teile des Vernetzers 2 und 2 Teile eines 35%igen wäßrigen Farbstoffteigs des roten Pigmentfarbstoffs der Color-Index-Nr. 12370 ein. Mit der so erhaltenen Druckpaste bedruckt man ein Baumwollgewebe, trocknet es und fixiert anschließend 5 Minuten bei 175°C mit Heißdampf. Man erhält einen Druck mit guter Koch-Wasch-Beständigkeit und guten Reibechtheiten, wobei das bedruckte Material einen sehr weichen Griff aufweist.

Beispiel 12

13,4 Teile Wasser werden mit einem Teil Bis-2,4-xylenolglycerinether, der mit 18 Mol Ethylenoxid umgesetzt ist, und 20 Teile einer 25%igen wäßrigen Lösung des Natriumsalzes eines Lösungspolymerisats aus 5% Acrylsäure, 87% Methylacrylat und 8% Acrylnitril gemischt. In diese Mischung emulgiert man anschließend unter Verwendung eines hochtourigen Rührers 65,6 Teile Benzin vom Siedebereich 140 bis 220°C. Man erhält eine hochviskose Emulsion. In 96 Teile dieser Emulsion rührt man anschließend 2 Teile des Vernetzers 2 und 2 Teile eines 35%igen wäßrigen Farbstoffteigs des gelben Pigments der Color-Index-Nr. 20040. Mit der so erhaltenen Druckpaste bedruckt man im Rouleaux-Druck einen Baumwoll-Creton, trocknet und fixiert 5 Minuten bei 140°C mit Heißluft. Man erhält einen Druck mit guter Koch-Wasch-Beständigkeit und guten Reibechtheiten bei sehr weichem Griff.

Beispiel 13

In 903 Teile Wasser rührt man nacheinander 80 Teile einer 40%igen wäßrigen Dispersion eines Copolymerisates aus 85% Butylacrylat, 8% Acrylnitril, 3% Hydroxypropylacrylat und 4% N-Methylolmethacrylamid, 15 Teile des Vernetzers 2 und 2 Teile einer 38%igen wäßrigen Aufbereitung von Phthalocyaninblau der Color-Index-Nr. 74160. Mit der so erhaltenen Färbeflotte foulardiert man ein Baumwollgewebe, trocknet es bei 100 bis 110°C und fixiert anschließend bei 150°C mit Heißluft. Man erhält eine Färbung mit sehr guten Wasch- und Reibechtheiten.

## Patentansprüche

1. Verwendung von Polyisocyanaten als Vernetzer in Textilpigmentdruckpasten und Färbeflotten, dadurch gekennzeichnet, dass feste, feinteilige Polyisocyanate, die einen Schmelzpunkt von mindestens 25°C haben, deren mittlere Teilchengröße 0,1 bis 15 µm beträgt und deren Teilchenoberflächen durch Reaktion der darauf befindlichen Isocyanatgruppen mit gegenüber diesen Gruppen reaktiven Verbindungen desaktiviert sind, in Form von stabilen Dispersionen in einem flüssigen Dispersionsmedium in einer Menge von 0,1–6 Gew.-% eingesetzt werden.

2. Verwendung nach Anspruch 1, dadurch gekennzeichnet, daß man Isocyanate mit einem Schmelzpunkt oberhalb von 40°C einsetzt.

3. Verwendung nach Anspruch 1, dadurch gekennzeichnet, daß man 5 bis 60 Gew.-% Polyisocyanate enthaltende Dispersionen in aliphatischen und/oder aromatischen Kohlenwasserstoffen, die bei 20°C flüssig sind, einsetzt.

4. Verwendung nach Anspruch 1, dadurch gekennzeichnet, daß man 5 bis 50 Gew.-% Polyisocyanate enthaltende Dispersionen in Paraffinöl als Dispersionsmedium einsetzt.

5. Verwendung nach Anspruch 1, dadurch gekennzeichnet, daß man 5 bis 70. Gew.-% Polyisocyanate enthaltende Dispersionen in Wasser als Dispersionsmedium einsetzt.

6. Verwendung nach den Ansprüchen 1 bis 5, dadurch gekennzeichnet, daß man als Polyisocyanate Uretdiongruppen enthaltende Diisocyanate einsetzt.

7. Verwendung nach den Ansprüchen 1 bis 6, dadurch gekennzeichnet, daß man als Polyisocyanat Toluylendiisocyanat einsetzt, das über Uretdiongruppen dimerisiert ist.

8. Textilpigmentdruckpasten und Färbeflotten, die
a) 3 bis 35 Gew.-% einer 15 bis 55 Gew.-%igen wäßrigen Dispersion eines mindestens unter Fixierbedingungen (100 bis 200°C) filmbildenden Polymerisats als Bindemittel, das 0,3 bis 12 Gew.-% eines Monomeren mit mindestens einer gegenüber Isocyanat reaktiven Gruppe einpolymerisiert enthält,
b) 0,01 bis 40 Gew.-% eines Pigments,
c) 0 bis 16 Gew.-% eines Verdickungsmittels und/oder gegebenenfalls 5 bis 70 Gew.-% Benzin in emulgierter Form und

d) 0 bis 10 Gew.-% anderer üblicher Zusätze,

sowie zur Ergänzung auf 100 Gew.-% Waser enthalten, dadurch gekennzeichnet, daß die Textildruckpasten und Färbeflotten 0,1 bis 6 Gew.-% fester, feinteiliger Polyisocyanate, die einen Schmelzpunkt oberhalb von 25°C haben, deren mittlere Teilchengröße 0,5 bis 15 μm beträgt und deren Teilchenoberflä-chen durch Reaktion der darauf befindlichen Isocyanatgruppen mit gegenüber diesen Gruppen reaktiven Verbindungen desaktiviert sind, in Form von stabilen Dispersionen in einem flüssigen Dispersionsmedium als Vernetzer enthalten.

## Revendications

1. Utilisation de polyisocyanates comme agents de réticulation dans des pâtes d'impression à pigments pour textiles et des bains de teinture, caractérisée en ce que les polyisocyanates solides finement divisés, qui ont un point de fusion d'au moins 25°C, dont la grosseur moyenne de particules s'élève à 0,1–15 μm et dont les surfaces de particules ont été désactivées par réaction des groupements isocyanate s'y trouvant avec des composés réactifs vis-à-vis de ces groupements, sont introduits sous forme de dispersions stables dans un milieu de dispersion liquide en quantités de 0,1 à 6% en poids.

2. Utilisation selon la revendication 1, caractérisée en ce qu'on introduit des polyisocyanates ayant un point de fusion supérieur à 40°C.

3. Utilisation selon la revendication 1, caractérisée en ce qu'on introduit des dispersions contenant 5 à 60% en poids de polyisocyanates dans des hydrocarbures aliphatiques et/ou aromatiques, qui sont liquides à 20°C.

4. Utilisation selon la revendication 1, caractérisée en ce qu'on introduit des dispersions contenant 5 à 50% en poids de polyisocyanates dans de l'huile de paraffine comme milieu de dispersion.

5. Utilisation selon la revendication 1, caractérisée en ce qu'on introduit des dispersions contenant de 5 à 70% en poids de polyisocyanate dans de l'eau comme milieu de dispersion.

6. Utilisation selon l'une quelconque des revendications 1 à 5, caractérisée en ce qu'on introduit, en tant que polyisocyanates, des diisocyanates contenant des groupements uretdione.

7. Utilisation selon l'une quelconque des revendications 1 à 6, caractérisée en ce qu'on introduit, en tant que polyisocyanates, du toluylènediisocyanate qui a été dimérisé par l'intermédiaire de groupements uretdione.

8. Pâtes d'impression à pigments pour textiles et bains de teinture qui contiennent

a) 3 à 35% en poids d'une dispersion aqueuse à 15–55% en poids d'au moins un polymère filmogène dans les conditions de fixation (100 à 200°C) en tant que liant, le polymère contenant en chaîne polymère 0,3 à 12% en poids d'un monomère ayant au moins un groupement réactif vis-à-vis des isocyanates,

b) 0,01 à 40% en poids d'un pigment,

c) 0 à 16% en poids d'un épaississant et/ou éventuellement 5 à 70% en poids d'essence sous forme émulsifiée, et

d) 0 à 10% en poids d'autres additifs classiques,

ainsi que le complément à 100% d'eau, caractérisées en ce que les pâtes d'impression pour textiles et les bains de teinture contiennent en tant qu'agent de réticulation 0,1 à 6% en poids de polyisocyanates solides finement divisés, qui ont un point de fusion supérieur à 25°C, dont la grosseur moyenne de particules s'élève à 0,5–15 μm et dont les surfaces de particules ont été désactivées par réaction des groupements isocyanates s'y trouvant avec des composés réactifs vis-à-vis de ces groupements, sous forme de dispersions stables dans un milieu de dispersion liquide.

## Claims

1. Use of polyisocyanate as a crosslinking agent in a textile pigment print paste or a dyeing liquor, wherein a finely divided solid polyisocyanate which has a melting point of not less than 25°C and an average particle size of from 0.1 to 15 μm and whose particle surfaces have been deactivated by reacting the isocyanate groups present thereon with compounds which are reactive toward these groups, is used in the form of a stable dispersion in and liquid dispersion medium in an amount of from 0.1 to 6% by weight.

2. Use as claimed in claim 1, wherein an isocyanate having a melting point above 40°C is used.

3. Use as claimed in claim 1, wherein a dispersion containing from 5 to 60% by weight of a polyisocyanate in aliphatic and/or aromatic hydrocarbons which are liquid at 20°C is used.

4. Use as claimed in claim 1, wherein a dispersion containing from 5 to 50% by weight of a polyisocyanate in liquid paraffin as the dispersion medium is used.

5. Use as claimed in claim 1, wherein a dispersion containing from 5 to 70% by weight of a polyisocyanate in water as the dispersion medium is used.

6. Use as claimed in claims 1 to 5, wherein the polyisocyanate used is a diisocyanate containing uretdione groups.

7. Use as claimed in claims 1 to 6, wherein the polyisocyanate used is toluylene diisocyanate which is dimerized via uretdione groups.

8. A textile pigment print paste or a dyeing liquor which contains

a) as a binder, from 3 to 35% by weight of a 15-15% strength by weight aqueos dispersion of a polymer which is film-forming at least under fixing conditions (from 100 to 200°C) and contains, as copolymerized units, from 0.3 to 12% by weight of a monomer possessing one or more groups which are reactive toward isocyanate,

b) from 0.01 to 40% by weight of a pigment,

c) from 0 to 16% by weight of a thickener and/or, if appropriate, from 5 to 70% by weight of gasoline in emulsified form and

d) from 0 to 10% by weight of other conventionial additives as well as water to make up to 100% by weight, wherein the textile pigment print paste or the dyeing liquor contains as a crosslinking agent from 0.1 to 6% by weight of a finely divided solid polyisocyanate which has a melting point above 25°C and an average particle size of from 0.5 to 15 μm and whose particle surfaces have been deactivated by reacting the isocyanate groups present thereon with compounds which are reactive toward these groups, in the form of a stable dispersion in a liquid dispersion medium.